# EUROPEAN PATENT APPLICATION

(11) **EP 4 068 863 A1**
(43) Date of publication of application: **05.10.2022**
(21) Application number: 21166299.4
(22) Date of filing: 31.03.2021
(51) Int. Cl.: H04W 48/18, H04W 24/02

(54) **METHOD AND SYSTEM FOR PROVIDING AN OPTIMAL NETWORK SLICE IN A 5G CORE NETWORK**

(71) Applicant: Siemens Sanayi ve Ticaret A. S., 34870 Istanbul (TR)
(72) Inventor: Akgunduz, Mustafa Haluk, 34870 Istanbul (TR); Ulusoy, Kazim, 34870 Kartal/Istanbul (TR)
(74) Representative: Maier, Daniel Oliver

(57) **Abstract**

Method for providing an optimal network slice in a 5G core network (CN), wherein:
a) selecting a preliminary set of network slices considering at least two of following slice filter parameters for each element of the set:
• predefined SLA characteristics data, including SLA configuration data defining minimal user requirements of a slice,
• system monitoring data, including slice specific data of the core network (CN) and user equipment specific data on core network (CN) side defining minimal core network (CN) related requirements of a slice,
• UE characteristics data, including behavioral monitoring of the network slice traffic per user equipment (UE) defining minimal user equipment (UE) related requirements of a slice,
• slice characteristics data, including slice characteristics based on available slices within the core network (CN),

b) reselecting (RE) one network slice from the set of preliminary network slices according to at least one predefined filtering rule as the optimal network slice,
c) and providing the optimal network slice to the core network (CN).

## Description

The invention relates to a method and a computer implemented system for providing an optimal network slice in a 5G core network.

In 5G networks, there are multiple domains that can be addressed with 5G technologies, like URLLC, mIOT, eMBB, mmWave etc.

Therefore, for 5G networks network slicing methodology it is crucial to differentiate different types of domain specific requirements.

In standard scheme network, slicing methodologies does not support dynamic resource utilization in which, networks slice densities can be unbalanced between each other in interdomain manner.

In return some slices may become too busy and unresponsive, on the other hand, rest of the slices may stay unutilized.

In addition, no specific user equipment (UE) allocation exists inter-domains.

In current schemes, the slice information, like subscriber data and profiles, is stored in Unified Data Management UDM, hence, all the registered user equipment in the 5G cellular network connect to the system by their assigned slice ID's.

However, this scheme may cause resource demand problem in case of the usage of the same slices by user equipment at the same time.

Today, the problem is solved by increasing the resource requirements of the network slices or scaling of the network functions, inside the domains that needs additional resources, or create new slices again needs new resource requirements.

The problem is a technically known issue in 5G networks.

The publication US 20200059856 A1 describes how the problem is solved based on slice only resource adaptations between slices for a predefined condition.

The publication US 20200187085 A1 describes how the problem is solved by UE based application policy handlers, which is associated in the UEs.

In another academic research publication "Mobile Traffic Forecasting for Maximizing 5G Network Slicing Resource Utilization", IEEE INFOCOM 2017 it is described how the problem is solved by applying traffic analysis on the network slices and proposing an adaptive correction based on the forecasted loads.

Basically, prior art is basically based on resource centric allocations per slice, wherein any demand of new resource requirement is only addressed in the current system, and it is solved with new resource additions.

The objective of the invention is to improve the network slice usage in 5G networks.

The objective is solved by a method for providing an optimal network slice in a 5G core network, wherein following steps are executed:
a) Selecting a preliminary set of network slices considering at least two of following slice filter parameters for each element of said set:
   - service level agreement characteristics data, including service level agreement configuration data defining minimal user requirements of a slice,
   - system monitoring data, including slice specific data of the core network and user equipment specific data on core network side defining minimal core network related requirements of a slice,
   - user equipment characteristics data, including behavioral monitoring of the network slice traffic per user equipment defining minimal user equipment (UE) related requirements of a slice,
   - slice characteristics data, including slice characteristics based on available slices within the core network,
b) Reselecting one network slice from the set of preliminary network slices according to at least one predefined filtering rule as the optimal network slice,
c) and providing the optimal network slice to the core network.

At the selecting step a) the preliminary set contains slices with at least two of said parameters, which leads to a preselection for the subsequent reselection in step b).

The preselection of parameters allows to establish a combination among them to find the best matching combination and to use this best matching slice as optimal network slice.

The selection and reselection can also consider slices in the preliminary set, which does not fulfill a full match, but also partly.

The preliminary set contains at least five, preferably at least ten, more preferably at least 50 or 100 elements, i.e. slices provided by the core network.

The slices are provided, and the reselected optimal slice is returned by an interface between the 5G core network and a computing device with a memory executing the method according to the invention.

Said parameters can be queried for instance from a data base, where system entities store relevant data e.g. calculated from actual system performance indicators or client requirements for the purpose of subsequent selection and reselection.

Such parameters can contain for instance ranges, values or statistics.

According to the invention, UE based characteristics, like SLA or online/offline monitoring data, are considered at the slice selection process.

In other words, resource allocations based on UE or SLA characteristics can be considered in 5G core networks.

The invention fundamentally improves the network slice usage in 5G core networks, from per UE and general network monitoring aspect by defining separate characteristics engines dedicated to UE/slice and SLA based analysis, to initiate a slice utilization.

Cost and performance advantages both for client and 5G operator arise, and further, 5G operators can make more elastic and grain size configurations for UEs, especially for wide range of industrial device types.

By the features of the invention, UE specific and generic network related parameters, like bandwidth or latency are added to improve the network slice selection process.

Basically, network slices are a type of virtual networking architectures that allow the creation of multiple virtual networks atop a shared physical infrastructure.

A clear benefit of 5G network slicing is the ability to deploy only the functions necessary to support particular UE and generic network related features.

The invention aims to alter the network slice selection to make the slice functionality more optimal and effective with using extra components to initiate the reselection process. The slice characteristics can be processed dynamically or statically.

In a further development of the invention it is foreseen that the at least one filtering rule is applied recursively at the reselecting step b).

Consequently, the filtering can provide a best fit network slice for the further use in a very easy way.

Further, alternative approaches like iterative filtering are applicable.

Moreover, machine learning based solutions or lookup-based implementations for filtering could be used.

In a further development of the invention it is foreseen that the at least one filtering rule is modified in each recursive filtering at the reselecting step b) according to a predefined convergence criterion.

Thus, the execution of the filtering can be very effective, i.e. fast and does not require extensive calculations and thus, the latency is kept low.

In a further development of the invention it is foreseen that the modification of the convergence criterion relates to a change if at least one parameter range of said slice filter parameters.

It is advantageous for the slice filtering if a parameter ranges is adopted to obtain a best match network slice.

In a further development of the invention it is foreseen that the modification of the convergence criterion is related to a change of at least one parameter from said slice filter parameters.

It is advantageous for the slice filtering if a parameter combination is adopted to obtain a best match network slice. In a further development of the invention it is foreseen that the modification of the convergence criterion is related to the filtering sequence of parameters from said slice filter parameters.

It is advantageous for the slice filtering if a parameter sequence is adopted to obtain a best match network slice.

In a further development of the invention it is foreseen that the convergence criterion limits the at least one filtering rule compared to the previous recursive step of the filtering, if the previously applied filtering returns an empty set, and delimits the at least one filtering rule compared to the previous recursive step of the filtering, if the filtering returns a set containing more than one element.

It is advantageous for the slice filtering if the filtering considers a filter result with an empty set as no result and steps back to a non-empty set for filtering.

In a further development of the invention it is foreseen that three or four of said slice filter parameters in step a) are considered at determining the preliminary set of network slices. characteristic

It is advantageous for the slice filtering if a parameter combination is adopted.

The objective of the invention is achieved by a device for providing an optimal network slice in a 5G core network, comprising a service level agreement characteristics engine, configured to determine Service Level Agreement characteristics data, a user equipment characteristics engine, configured to determine user equipment characteristics data, a slice characteristics engine, configured to determine slice characteristics data, a system monitoring engine, configured to determine system characteristics data, wherein the system is configured to execute the method according to the invention.

The system comprised a computing means with am memory and interfaces to capture relevant data and to provide the network slice information through an interface to a network operator.

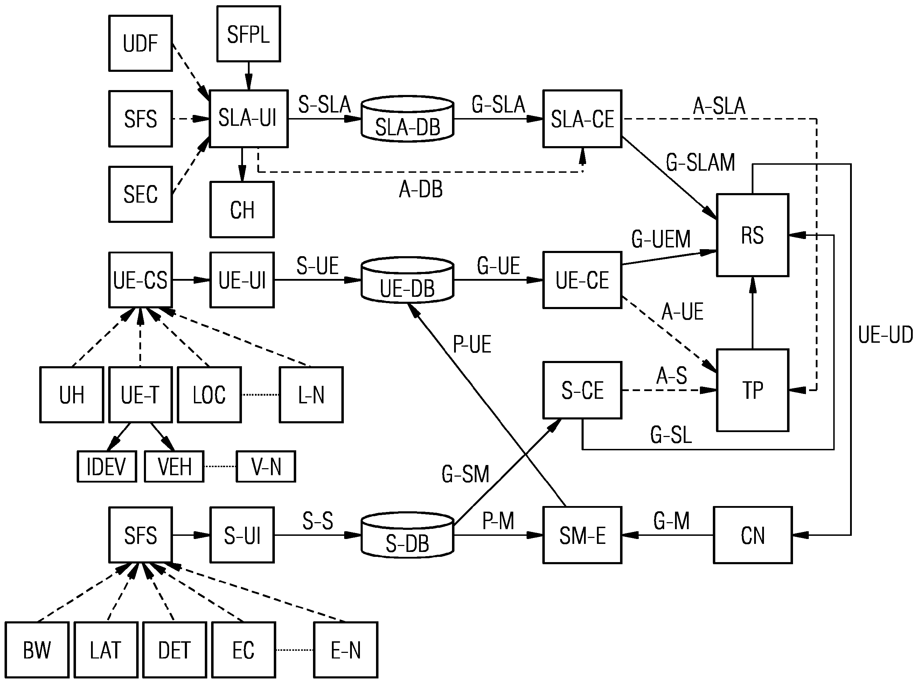

The invention is explained in more detail below with reference to an exemplary embodiment shown in the accompanying drawing, which show a first embodiment of the invention with an example of a domain model.

In particular, the figure shows a flow chart including the domain model with five major components that can drive the slice reselection process:

### SLA Characteristics Engine SLA-CE:

The SLA characteristics engine S-CE is responsible for processing the SLA configuration data to be used in reselection process for UE specific mandatory constraints.

To achieve that, SLA configuration data is stored in an SLA database SLA-DB, which is driven by an operator using a user interface SLA-UI.

The SLA data comprise mandatory user equipment UE / slice specific features such as bandwidth, latency, security, user equipment UE type, charging etc.

These features can be listed prioritized in the SLA database SLA-DB, and these data can be retrieved by the SLA characteristics engine SLA-CE to be used in reselection process.

For instance, whenever a configuration change happens through the SLA user interface SLA-UI by an operator, the SLA user interface SLA-UI sends the updated data to the SLA database SLA-DB and initiates a trigger event for the SLA characteristics engine SLA-CE.

Then, the SLA characteristics engine SLA-CE gets the data from the SLA database SLA-DB and makes the necessary reformatting, restructuring etc. processes to be understood by the reselection process.

Subsequently, the SLA characteristics engine SLA-CE triggers an alarm event A-SLA via trigger process to get reselection process notified.

This SLA characteristics engine SLA-CE has preferably the top priority among all engines applied.

### System Monitoring Engine SM-E:

The system monitoring engine SM-E is responsible for getting and processing all slice and user equipment UE specific data from a 5G core network CN.

The 5G core network is responsible for the core functionality as defined in 3GPP standards.

The system monitoring engine SM-E executes continuously all the time and applies different variety of analysis like time series, rule-based, ML-based algorithms on the retrieved data for both slice and user equipment UE from the 5G core network CN.

The processed data are written to both Slice database S-DB and UE database UE-DB to be used by the UE Characteristics engine UE-CE and the Slice Characteristics engine S-CE.

### UE Characteristics Engine UE-CE:

The UE characteristics engine UE-CE is responsible for processing behavioral monitoring of the network slice traffic per UE.

In result, based on an input feature set, it allows to automatically reconfigure the network slice selection process based on user equipment UE behaviors with zero operator intervention.

To achieve that, user equipment UE configuration data is stored in a UE database UE-DB, which is driven by an operator using a user interface.

User equipment UE data can comprise runtime UE specific features, such as usage history, UE activity, location, UE type etc.

The user equipment characteristics engine UE-CE executes continuously all the time, to analyze the runtime characteristics of the user equipment UE, via getting online/offline characteristics data from UE database.

Within predefined intervals, the UE characteristics engine UE-CE triggers an alarm event A-UE via trigger process to get reselection process notified about the UE characteristics data.

### Slice Characteristics Engine S-CE:

The slice characteristics engine S-CE is responsible for processing slice characteristics based on given feature set, dynamically or statically.

With this information, the slice characteristics engine S-CE creates a suitable list of slices usable by a slice reselection process.

To achieve that, slice configuration data is stored in a slice database, which is driven by an operator using a slice user interface.

Slice data can comprise runtime slice specific features such as bandwidth, latency, determinism, error count, accuracy, etc.

The slice characteristics engine S-CE executes continuously all the time, to analyze the runtime characteristics of the Slice, via getting online/offline characteristics data from the Slice database within predefined intervals.

The slice characteristics engine S-CE triggers an alarm event A-S via trigger process to get reselection process notified about the processed slice data whenever the slice is unavailable or un-operational.

Data regarding SLA characteristics, system monitoring, UE characteristics and/or slice characteristics are regarded as "slice filter parameters" in the subsequent filtering method.

### Reselection Process:

The reselection process is responsible for processing the outputs of the SLA characteristics engine SLA-CE, the UE characteristics engine UE-CE and the Slice characteristics engine S-CE to determine the right slice selection for the given user equipment UE.

The reselection process comprises a conditional decide mechanism to determine the right slice requirements at the execution moment.

It uses SLA data, UE data and Slice data to determine the proper slice configuration for the user equipment UE in the given priority order respectively.

Subsequently, the reselection process notifies back to the 5G core network about the updated slice configuration.

In the shown embodiment of the invention the SLA user interface SLA-UI considers service level agreement SLA related data like user defined features UDF, a slice feature set SFS, security information SEC and a slice feature priority list SFPL, which provides charging information CH and sends SLA configuration data S-SLA to the SLA data base SLA-DB.

Moreover, the SLA user interface SLA-UI initiates the alarm event A-DB for an update of the SLA data base SLA-DB.

The SLA characteristics engine SLA-CE gets SLA configuration data G-SLA, like available slices at the core network CN from the SLA data base SLA-DB.

The user equipment UE characteristics set UE-CS comprises for instance data regarding usage history UH, user equipment type UE-T, industrial device IDEV, vehicle VEH selected from types V-N, location LOC selected from types L-N.

The UE user interface UE-UI captures the UE characteristics set UE-CS and sends UE configuration data S-UE to a UE data base UE-DB.

A UE characteristics engine UE-CE gets online/offline UE data G-UE.

The slice feature set SFS comprises data related to a bandwidth BW, a latency LAT, a determinism DET and an error count EC of different types E-N.

A slice user interface S-UI captures the slice feature set SFS and sends slice configuration data S-S to a slice data base S-DB.

A slice characteristics engine S-CE gets online/offline UE metrics G-SM.

A system monitoring engine SM-E gets pushed online/offline slice metrics P-M.

Online/offline UE metrics P-UE are pushed by the system monitoring engine SM-E to the UE data base UE-DB as well.

Moreover, the system monitoring engine SM-E gets online/offline slice/UE metrics G-M from the active 5G core network CN.

A trigger process TP receives alarm events A-S for a slice and alarm events A-UE for user equipment UE and alarm events A-SLA for SLA.

A reselection process RS gets SLA metrics data G-SLAM and processes UE metrics data G-UEM, as well as a processed slice list G-SL and select the best slice for the current use.

Moreover, the reselection process RS considers relevant alarm information from the trigger process TP.

The reselection process RS provides information about the reselected slice by a UE configuration update UE-UD to the 5G core network CN.

In a subsequent reselection step, the network slice with the longest network slice is selected from the determined preliminary network slices as the optimal network slice.

The optimal network slice is provided subsequently to the core network CN.

In a preferred embodiment, an industry customer orders for instance individually configured network slices from a 5G network operator.

Subsequently, the network operator generates such individual slices, and the industry customer obtains additionally to the slice management information of the ordered slice, e.g. through an open interface.

The slice selection procedure is executed to create e.g. 50 slices based on their hardware characteristics, like CPU performance, CPU energy consumption, memory size NIC interface speed or although security parameters.

Basically, for the slice selection process several parameters can be used, for instance slice type information like Ultra-Reliable Low-Latency Communication type (URLLC), slice performance requirements like latency or reliability, capacity requirements like a defined minimum throughput or even functionality requirements like cache or broadcast features.

Such network service requirements ("General Service Template", GST) can be provided to the operator, which transfers the GST as a "Network Service Template" (NST), which triggers a "Network Instantiation Process".

Subsequently via an "End-to-End Network Slice Management" module, this information is distributed to the relevant parties, like RAN ("Radio Access Networks") Slice Management, Transport Slice Management or Core Slice Management modules.

The embodiment of the slice selection procedure according to the invention comprises following steps:
At the beginning, a user equipment UE comes to the system carrying out the method according to the invention to connect with a predefined slice ID and UE ID stored in the sim-card.

A first check is performed, if there is an SLA information stored in the system, i.e. in the SLA data base SLA-DB through the SLA characteristics engine SLA-CE for this user equipment UE-ID, e.g. a PLC device.

It is further checked, if there is a SLA characteristics info found for this user equipment UE-ID, and if so, a SLA filtering is applied for this user equipment UE to a predefined set of Slice List, overriding a predefined one, which comes inside the SIM-card. At the end, the available slice list count is reduced based on the SLA characteristic.

If the applied filtering criteria filter all the slices out of the filtering result list, then the SLA characteristics are "softened", i.e. at least one criterion is modified or dropped, to get at least one selectable slice for this user equipment UE. It is implied that the filtering procedure is repeated after "softening" one or more parameter.

If there is not any SLA information stored in the SLA data base SLA-DB for this user equipment UE, then no filtering is applied.

Subsequently, then system checks further, if there is a user equipment UE characteristics information stored in UE characteristics data base UE-DB through the UE characteristics engine UE-CS for this user equipment UE-ID.

If there is a user equipment UE characteristics info is found for this user equipment UE-ID, then UE characteristics filtering is applied for this user equipment UE, latency characteristics of 100ms.

At the end the available slice list count is reduced based on the UE characteristic, wherein the available slice list is an output said SLA filtering.

If the filtering criteria filter all the slices, then the UE characteristics are "softened" for this user equipment UE as described before to get at least one selectable slice, e.g. 120ms latency instead of 100ms latency.

If there is not any user equipment UE characteristics information stored in the user equipment UE characteristics data base UE-DB for this user equipment UE, then no filtering is applied.

Subsequently, the system selects the slice characteristics S-DB through slice characteristics engine S-CE the "best" or "optimal" slice having e.g. the lowest latency, the highest bandwidth, minimum error count EC or is being least used.

This is obtained by applying a generic/internal filter, from the filtered slice list, which is the output of user equipment UE characteristics filtering) to select one slice finally.

Prioritization of the characteristics are defined based on the domain can be done by:
- Telecom operator: slice feature set priority list could be applied in the sequence:
   error-Count EC -> bandwidth BW -> latency LAT -> least used
- Industrial private network: slice feature set priority list could be applied in the sequence:
   error-Count EC -> latency LAT -> bandwidth BW-> least used

The reselection process can be applied at following events:
- If there is an SLA update for a specific user equipment UE through the SLA user interface SLA-UI, then an alarm event is triggered for the user equipment UE to initiate the slice reselection process, by the SLA characteristics engine SLA-CE.
- If there is a user equipment UE characteristics update for a specific user equipment UE through user equipment user interface UE-UI, then an alarm event is triggered for the user equipment UE to initiate the slice reselection process by the UE characteristics engine UE-CE.
- In parallel, the slice characteristics engine S-CE and system monitoring engines SM-E collect characteristics data dynamically, like slice latencies LAT, bandwidths BW, error counts EC, usage rates etc. from slices and updates of the slice data base S-DB for a predefined period of time.
- If a slice starts unable to meet its base characteristics that is detected by system monitoring engine SM-E, e.g. 100ms defined slice gets slower by usage and time, then an alarm event is triggered for this slice to initiate slice reselection process for the user equipment UE assigned to this slice sequentially by slice characteristics engine S-CE, until the slice fits its base characteristics, which can be predefined by the 5G core network CN.

The method according to the invention is defined by following steps:
a) selecting a preliminary set of network slices considering at least two of following slice filter parameter for each element of the set:
   - predefined SLA characteristics data, including SLA configuration data defining minimal user requirements of a slice,
   - system monitoring data, including slice specific data of the core network CN and user equipment specific data on core network CN side defining minimal core network CN related requirements of a slice,
   - UE characteristics data, including behavioral monitoring of the network slice traffic per user equipment UE defining minimal user equipment UE related requirements of a slice,
   - slice characteristics data, including slice characteristics based on available slices within the core network CN,
b) reselecting RE one network slice from the set of preliminary network slices according to at least one predefined filtering rule as the optimal network slice,
c) and providing the optimal network slice to the core network CN.

The at least one filtering rule is applied recursively at the reselecting step.

The filtering rule is modified in each recursive filtering at the reselecting step according to a predefined convergence criterion.

The convergence criterion, especially the sequency of filtering parameters, can be defined according to the demands of a telecom operator or an industrial user, as discussed before.

The modification of the convergence criterion can relate to a change e.g. to a parameter range of said slice filter parameters or a parameter selection from said slice filter parameters or the applied filtering sequence of parameters.

Method according to one of the claim 3 to 5, wherein the convergence criterion limits the at least one filtering rule compared to the previous recursive step of the filtering, if the previously applied filtering returns an empty set, and delimits the at least one filtering rule compared to the previous recursive step of the filtering, if the filtering returns a set containing more than one element.

Method according to one the preceding claims, wherein three or four of said slice filter parameters in step a) are considered at determining the preliminary set of network slices.

### List of reference numerals:

- A-DB: alarm event for SLA DB update
- A-S: alarm event for slice
- A-SLA: alarm event for SLA
- A-UE: alarm event for UE
- BW: bandwidth
- CH: charging information
- CN: 5G core network
- DET: determinism
- EC: error count
- E-N: error count - N
- G-M: get online/offline slice/UE metrics
- G-SL: get processed slice list
- G-SLA: get SLA configuration data
- G-SLAM: get SLA metrics
- G-SM: get online/offline UE metrics
- G-UE: get online/offline UE data
- G-UEM: get processes UE metrics
- IDEV: industrial device
- LAT: latency
- L-N: location - N
- LOC: location
- P-M: push online/offline slice metrics
- P-UE: push online/offline UE metrics
- RS: reselection process
- S-CE: slice characteristics engine
- S-DB: slice data base
- SEC: security information
- SFPL: slice feature priority list
- SFS: slice feature set
- SLA: service level agreement
- SLA-CE: SLA characteristics engine
- SLA-DB: SLA data base
- SLA-UI: SLA user interface
- SM-E: system monitoring engine
- S-S: send slice configuration data
- S-SLA: send SLA configuration data
- S-UE: send UE configuration data
- S-UI: slice user interface
- TP: trigger process
- UDF: user defined feature
- UE: user equipment
- UE-CE: UE characteristics engine
- UE-CS: UE characteristics set
- UE-DB: UE data base
- UE-SLA: UE service level agreement
- UE-T: UE type
- UE-UD: UE configuration update
- UE-UI: UE user interface
- UH: usage history
- VEH: vehicle
- V-N: vehicle type - N

## Claims

1. Method for providing an optimal network slice in a 5G core network (CN), **characterized by** following steps:
a) selecting a preliminary set of network slices considering at least two of following slice filter parameters for each element of the set:
• service level agreement characteristics data, including service level agreement configuration data defining minimal user requirements of a slice,
• system monitoring data, including slice specific data of the core network (CN) and user equipment specific data on core network (CN) side defining minimal core network (CN) related requirements of a slice,
• user equipment characteristics data, including behavioral monitoring of the network slice traffic per user equipment (UE) defining minimal user equipment (UE) related requirements of a slice,
• slice characteristics data, including slice characteristics based on available slices within the core network (CN),
b) reselecting (RS) one network slice from the set of preliminary network slices according to at least one predefined filtering rule as the optimal network slice,
c) and providing the optimal network slice to the core network (CN).

2. Method according to the preceding claim, wherein the at least one filtering rule is applied recursively at the reselecting step b).

3. Method according to the preceding claim, wherein the at least one filtering rule is modified in each recursive filtering at the reselecting step b) according to a predefined convergence criterion.

4. Method according to claim 3, wherein the modification of the convergence criterion relates to a change if at least one parameter range of said slice filter parameters.

5. Method according to one of the claims 3 or 4, wherein the modification of the convergence criterion is related to a change of at least one parameter from said slice filter parameters.

6. Method according to one of the claims 3 or 5, wherein the modification of the convergence criterion is related to the filtering sequence of parameters from said slice filter parameters.

7. Method according to one of the claim 3 to 6, wherein the convergence criterion limits the at least one filtering rule compared to the previous recursive step of the filtering, if the previously applied filtering returns an empty set, and delimits the at least one filtering rule compared to the previous recursive step of the filtering, if the filtering returns a set containing more than one element.

8. Method according to one the preceding claims, wherein three or four of said slice filter parameters in step a) are considered at determining the preliminary set of network slices.

9. Computer implemented system for providing an optimal network slice in a 5G core network, comprising a service level agreement characteristics engine (SLC-CE), configured to select SLA characteristics data, a user equipment characteristics engine (UE-CE), configured to select user equipment characteristics data, a slice characteristics engine (S-CE), configured to select slice characteristics data, a system monitoring engine (SM-E), configured to select system characteristics data, **characterized in that** the system is configured to execute the method according to one of the preceding claims.
